Europäisches Patentamt

European Patent Office

Office européen des brevets

(11) Publication number: **0 260 335 B1**

# EUROPEAN PATENT SPECIFICATION

(45) Date of publication of patent specification: **09.12.92**  (51) Int. Cl.5: **G01F 1/66**

(21) Application number: **86112748.8**

(22) Date of filing: **16.09.86**

(54) **Ultrasonic transreceiver.**

(43) Date of publication of application:
**23.03.88 Bulletin  88/12**

(45) Publication of the grant of the patent:
**09.12.92 Bulletin  92/50**

(84) Designated Contracting States:
**AT BE CH DE FR GB IT LI LU NL SE**

(56) References cited:
**US-A- 3 771 117**
**US-A- 3 890 423**
**US-A- 4 069 433**
**US-A- 4 417 480**

(73) Proprietor: **KAIJO CORPORATION**
**No. 1-5, Sakaecho 3-chome Hamura-shi**
**Tokyo(JP)**

(72) Inventor: **Ichino, Kouji c/o Kaijo Corporation**
**No. 1-5, Sakaecho 3-chome Hamura-shi**
**Tokyo(JP)**

(74) Representative: **Eisenführ, Speiser & Partner**
**Martinistrasse 24**
**W-2800 Bremen 1(DE)**

## Description

This invention relates to an ultrasonic transmitter-receiver (hereinafter referred to as "transreceiver"), and more particularly to an ultrasonic transreceiver for measuring the flow velocity and flow rate of gas flowing through a pipe using ultrasonic wave.

An apparatus has been developed and extensively used in a variety of fields which is adapted to measure the flow velocity and flow rate of gas such as air, steam, exhaust gas or the like flowing through a pipe utilizing a variation of propagation velocity of ultrasonic wave propagated through the gas.

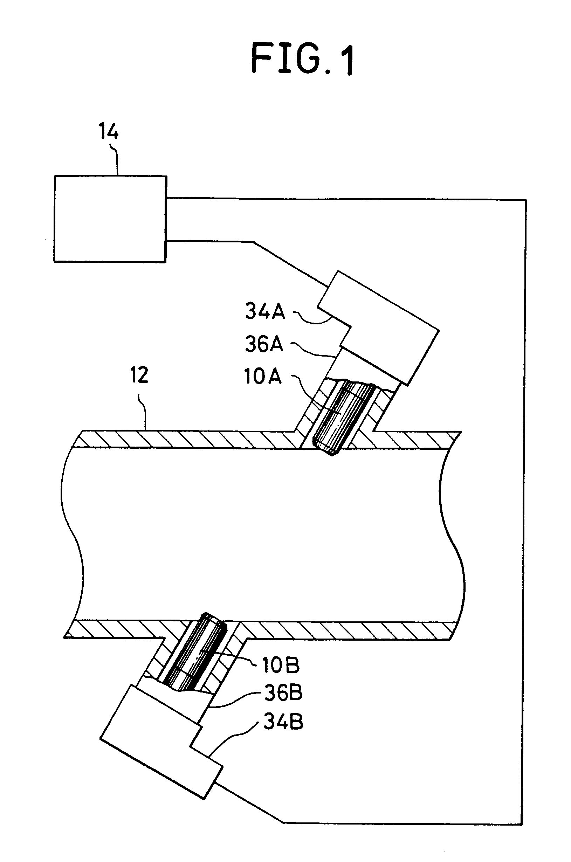

Such a conventional apparatus for measuring the flow velocity and flow rate of gas utilizing ultrasonic wave is typically constructed in such a manner as shown in Fig. 1. More particularly, an apparatus shown in Fig. 1 includes a pair of ultrasonic transreceivers 10A and 10B arranged on a wall of a pipe 12 in a manner to be obliquely opposite to each other. The ultrasonic transreceivers 10 are alternately excited and controlled by a controller 14. Thus, in the apparatus, the flow velocity and flow rate of gas flowing through the pipe 12 are measured on the basis of the difference between a period of time for which ultrasonic wave is propagated from the transreceiver 10A to the transreceiver 10B and that for which it is propagated from the transreceiver 10B to the transreceiver 10A.

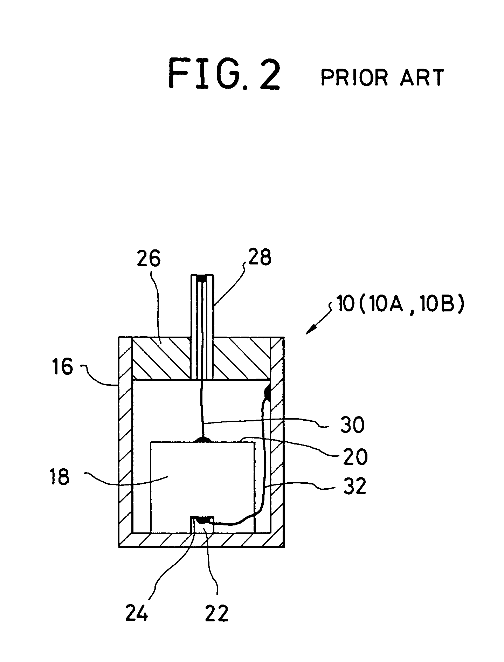

In general, the conventional ultrasonic transreceivers 10A and 10B used in the flow velocity and flow rate measuring apparatus each are typically constructed as shown in Fig. 2. The conventional ultrasonic transreceiver 10 includes a housing 16 formed of a metal material to have an upper open end and a lower closed end. The ultrasonic transreceiver 10 also includes a piezoelectric transducer 18 formed of a ceramic material and having piezoelectric characteristics, which is fixed on a bottom wall of the housing 16 by means of an adhesive. The piezoelectric transducer 18 is formed on an upper surface thereof with a first electrode or positive electrode 20. The positive electrode 20 is made of a suitable material such as gold, silver, nickel or the like into a film-like shape by vapor deposition, baking, plating or the like. Also, the piezoelectric transducer 18 is formed on a lower end thereof and a peripheral surface in proximity to the lower end with a second electrode or negative electrode 22 and a connection 24 in a manner to be contiguous to each other. The negative electrode 22 is formed in substantially same manner as the positive electrode 20.

The ultrasonic transreceiver 10 also includes an insulating member 26 which is formed with a vertical through-hole and securely fitted in the upper open end of the housing 16, and a pipe-like plug 28 of which a lower portion is fixedly fitted in the central through-hole of the insulating member 26. The plug 28 and positive electrode 20 are electrically connected to each other by means of a first lead wire 30. The connection of the lead wire 30 with respect to the plug 28 and positive electrode 20 is carried out by soldering. Likewise, the negative electrode 22 and housing 16 are electrically connected to each other through a second lead wire 32 by soldering.

The ultrasonic transreceivers 10A and 10B constructed as described above, as shown in Fig. 1, are integrally mounted in terminal boxes 34A and 34B which are then fixed in sockets 36A and 36B of the pipe 12 by means of screws or flanges, respectively.

Unfortunately, the measuring of flow velocity and flow rate of hot gas such as steam or the like flowing through the pipe 12 by means of the ultrasonic transreceivers 10A and 10B described above causes the transreceivers to be contacted directly with the hot gas, so that the transreceivers may undergo a sudden temperature variation and a severe heat cycle.

Such temperature variation and heat cycle lead to the generation of deviation thermal strain due to the difference in a thermal expansion coefficient between the housing 16 and the piezoelectric transducer 18, resulting in internal stress being produced at the adhesive-bonded portion between the housing 16 and the piezoelectric transducer 18. When the so-produced internal stress or thermal stress is above the bond strength of an adhesive used in the transreceiver 10, any breakage occurs at the adhesive-bonded portion to cause the piezoelectric transducer to be gradually peeled off from the housing 16.

Such peeling causes a gas boundary layer to be formed between the piezoelectric transducer 18 and the housing 16, so that an ultrasonic pulse signal received by the piezoelectric transducer 18 may be subjected to the attenuation of propagation due to diffusion, absorption, dispersion and the like to be highly decreased in level. It would be considered to use an adhesive of high bond strength in order to prevent such peeling. However, this causes the internal stress due to the deviation thermal strain to be generated in the interior of the piezoelectric transducer 18, so that it may be broken to a degree sufficient to fail in the transmitting and receiving of ultrasonic wave. Accordingly, the transreceiver fails to measure the flow velocity and flow rate of gas flowing through the pipe 12.

Further, the direct contacting of the transreceiver with hot gas causes it to be heated to a temperature approximate to that of the hot gas.

This leads to the melting of solder used for connecting the lead wires 30 and 32 to the electrodes 20 and 22 of the piezoelectric transducer 18, resulting in a failure in electrical connection therebetween.

In order to minimize such a problem, it would be proposed to use high temperature solder. However, this promotes a solid metal-molten metal diffusion phenomenon which causes metal forming the electrodes 20 and 22 to be diffused into molten solder metal during soldering, because the soldering is carried out at a high temperature. This results in the peel strength of the electrodes 20 and 22 being highly decreased to lead peeling of the lead wires 30 and 32 from electrodes.

Also, the exposing of the piezoelectric transducer 18 to a high temperature for a long period of time highly promotes a solid metal-solid metal diffusion phenomenon which causes metal of the electrodes 20 and 22 to be diffused into solder metal, so that the electrodes may be peeled from the piezoelectric transducer 18 together with the lead wires 30 and 32.

Such a failure in electrical connection between the electrodes and the piezoelectric transducer due to the peeling of the electrodes therefrom renders the measuring of the flow velocity and flow rate of gas flowing through the pipe substantially impossible. This requires the ultrasonic transreceiver to be frequently replaced.

To overcome the above disadvantages, a transreceiver has been developed which is described in US-A-3 890 423 defining the closest prior art. This known transreceiver comprises a piezoelectric transducer which is arranged in a housing, and is provided with two electrodes. A plug consisting of a lead, a pin and a screw is mounted in the housing through an insulating bushing. The transreceiver also includes a metalic spring forming a bias means for pressing the transducer against a bottom wall of the housing. Thus, the spring, the pin and the lead together form an electrical connection. As a result, the piezoelectric transducer is forcedly pressed against the bottom wall of the housing by means of this spring so as to be in close contact with the bottom wall of the housing, such that not only the formation of a gas boundary layer between the housing and the piezoelectric transducer, and the breakage of the piezoelectric transducer may be effectively prevented, but satisfied electrial connection in the transreceiver may be ensured. No soldering for electrically connecting the transducer to the plug as well as no adhesive for mounting the transducer in the housing are required. Furthermore, the known transreceiver includes a liquid such as distilled water or oil serving as an interface between an electrode and the housing.

From US-A-3 771 117, a transducer installation is known, wherein an elastic member is placed between the transducer and the bottom wall.

According to the invention there is provided an ultrasonic transreceiver comprising:

a housing;

a piezoelectric transducer arranged in said housing and provided with a first electrode and a second electrode;

a plug mounted with respect to said housing and electrically connected to one of said electrodes; and

a bias means for forcedly pressing said piezoelectric transducer against said housing;

characterized by

a pressing means laterally arranged between said housing and said piezoelectric transducer in a manner to be forcedly pressed against said piezoelectric transducer and said housing and formed of an electrically conductive material to electrically connect the other one of said electrodes of the piezoelectric transducer and said housing to each other therethrough.

Further advantageous embodiments of the invention are defined in the subclaims.

The invention accordingly comprises the features of construction, combination of elements, and arrangement of parts which will be exemplified in the construction hereinafter set forth, and the scope of the invention will be indicated in the claims.

For a fuller understanding of the invention, reference is had to the following description taken in connection with the accompanying drawings in which like reference numerals designate like or corresponding parts throughout; wherein:

Fig. 1 is a schematic view showing a general structure of an apparatus for measuring the flow velocity and flow rate of gas flowing through a pipe;

Fig. 2 is a vertical sectional view showing a conventional ultrasonic transreceiver;

Fig. 3 is a vertical sectional view showing an embodiment of an ultrasonic transreceiver according to the present invention; and

Fig. 4 is a vertical sectional view showing a modification of the embodiment shown in Fig. 3.

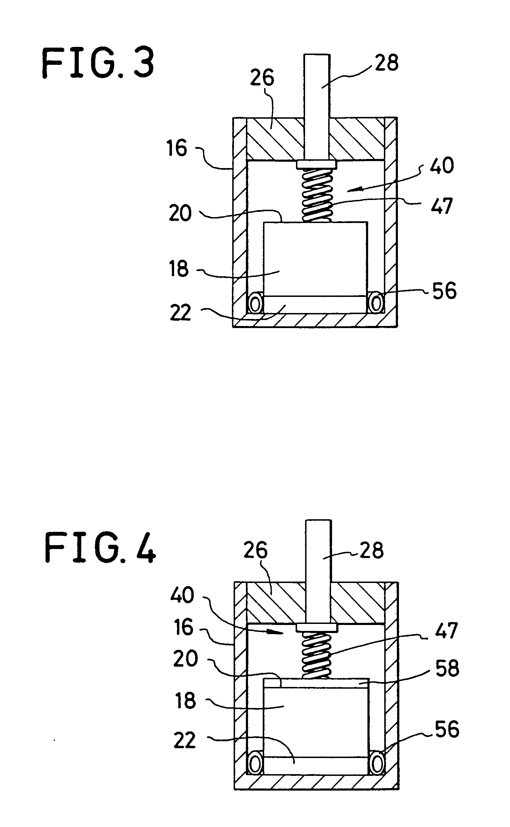

Reference is first made to Fig. 3 wherein an embodiment of an ultrasonic transreceiver according to the present invention is depicted. The ultrasonic transreceiver includes a housing 16 formed of a metal material to have an upper open end and a lower closed end. The ultrasonic transreceiver also includes a piezoelectric transducer 18 formed of a ceramic material to have piezoelectric characteristics. The piezoelectric transducer 18 is formed on an upper end surface thereof with a first electrode or positive electrode 20, as in the conventional ultrasonic transreceiver described above. Also, the piezoelectric transducer 18 is formed on a lower end thereof with a second electrode or negative electrode 22.

The transreceiver also includes an insulating member 26 which is formed with a vertical through-hole and securely fitted in the upper open end of the housing 16, and a pipe-like plug 28 of which a lower portion is fixedly fitted in the through-hole of the insulating member 26. The plug 28 and positive electrode 20 are electrically connected to each other by means of a first lead wire. The connection of the lead wire with respect to the plug 28 and positive electrode 20 may be carried out by soldering. Also, the negative electrode 22 and housing 16 are electrically connected to each other through a second lead wire by soldering.

One of features of the present invention is that a bias means generally designated by reference numeral 40 is provided between the plug 28 and the positive electrode 20 of the piezoelectric transducer 18 to forcedly press the the piezoelectric transducer 18 against a bottom wall of the housing 16.

The bias means 40 comprises a compressed coiled spring 47 directly arranged between a lower end of a plug 28 and a piezoelectric transducer 18, so that a holding member such as the holding member 42 in the embodiment described above may be eliminated. The compressed coiled spring 47 is formed of an electrically conductive material. Another featured construction of the embodiment illustrated is that a pressing means of an electrically conductive material 56 is arranged in a manner to be laterally interposed between a negative electrode 22 and a housing 16 to be laterally pressed against both members 22 and 16. The pressing means 56 may comprise a compressed coiled spring. Alternatively, it may comprise a spring of a substantially u-shape in section.

In the embodiment of the above-described featured construction, the bias means 40 is formed of an electrically conductive material, accordingly, it electrically connects the positive electrode 20 and the plug 28 to each other therethrough while keeping them at a face contact state therethrough and downwardly urges the piezoelectric transducer 18 against the bottom wall of the housing 16. Likewise, the pressing means 56 electrically connects the negative electrode 22 and the housing 16 to each other therethrough while keeping them at a face contact state therethrough. Thus, it will be noted that the embodiment effectively and stably ensures satisfied electrical connection irrespective of a variation of an environment such as a temperature and the like. Also, the electrically conductive property of the bias means 40 and pressing means 56 allows lead wires for forming electrical connection in the ultrasonic transreceiver 10 to be eliminated to simplify the structure of the transreceiver.

Fig. 4 shows a modification of the embodiment shown in Fig. 3. The modification is so constructed that a conductive plate member 58 is interposedly arranged between a bias means 40 and a positive electrode 20. The conductive plate member 58 is formed of a metal material and arranged in close contact with the positive electrode 20. Such construction effectively prevents an oxide film from being formed on the positive electrode 20, to thereby ensure satisfied electrical connection between a plug 28 and a piezoelectric transducer 18. Also, this prevents the wearing of the positive electrode 20 due to the vibrational contact between the electrode 20 and the bias means 40. The remaining part of the modification is constructed in substantially the same manner as the embodiment of Fig. 3.

Thus, it will be noted that the embodiment shown in Figs. 3 and 4 positively eliminates the above-described disadvantages encountered with the prior art utilizing soldering and effectively and stably keeps satisfied electrical connection of the electrodes with respect to the plug and housing. Also, the embodiment accomplishes such advantages with a simple structure.

**Claims**

1. An ultrasonic transreceiver comprising:
   a housing (16);
   a piezoelectric transducer (18) arranged in said housing (16) and provided with a first electrode (20) and a second electrode (22);
   a plug (28) mounted with respect to said housing (16) and electrically connected to one of said electrodes (20); and
   a bias means (40) for forcedly pressing said piezoelectric transducer (18) against said housing (16);
   characterized by
   a pressing means (56) laterally arranged between said housing (16) and said piezoelectric transducer (18) in a manner to be forcedly pressed against said piezoelectric transducer (18) and said housing (16) and formed of an electrically conductive material to electrically connect the other one of said electrodes (22) of the piezoelectric transducer (18) and said housing (16) to each other therethrough.

2. An ultrasonic transreceiver as defined in claim 1, wherein
   the first electrode (20) is provided on an upper end surface of said piezoelectric transducer (18) and electrically connected to said plug (28);
   the second electrode (22) is provided at a lower portion of said piezoelectric transducer (18) and electrically connected to said housing (16); and

the pressing means (56) electrically connects said housing (16) and said second electrode (22) of said piezoelectric transducer (18) .

3. An ultrasonic transreceiver as defined in claim 1, wherein said pressing means (56) comprises a compressed coiled spring.

4. An ultrasonic transreceiver as defined in claim 1, wherein said pressing means (56) comprises a coiled spring of a U-shape in section.

5. An ultrasonic transreceiver as defined in anyone of claims 1 to 4, wherein said bias means (40) downwardly forcedly presses said piezoelectric transducer (18) against a bottom wall of said housing (16).

6. An ultrasonic transreceiver as defined in claim 5, wherein said bias means (40) comprising a compressed coiled spring (47) directly arranged between said plug (28) and an upper end surface of said piezoelectric transducer (18).

7. An ultrasonic transreceicer as defined in claim 6, wherein said compressed coiled spring (47) is formed of an electrically conductive material to ensure electrical connection between said plug (28) and said piezoelectric transducer (18) therethrough.

8. An ultrasonic transreceiver as defined in claim 2, wherein an electrically conductive plate member (58) is arranged on said first electrode (20) in a manner to be in close contact with said electrode (20).

**Patentansprüche**

1. Ultraschallwandler mit:

einem Gehäuse (16);

einem in dem Gehäuse (16) angeordneten und mit einer ersten Elektrode (20) und einer zwei-ten Elektrode (22) versehenen piezoelektri-schen Wandler (18);

einem gegenüber dem Gehäuse (16) befestigten und an eine der besagte Elektroden (20) elektrisch angeschlossenen Stecker (28); und

einem Vorspannungsmittel (40) zum festen Andrücken des piezoelektrischen Wandlers (18) gegen das Gehäuse (16);

gekennzeichnet durch,

ein Druckmittel (56), das seitlich zwischen dem Gehäuse (16) und dem piezoelektrischen Wandler (18) in einer Weise angebracht ist, um an den piezoelektrischen Wandler (18) und das Gehäuse (16) gedrückt zu werden, und aus elektrisch leitendem Material gebildet ist, um die andere der Elektroden (22) des piezoelektrischen Wandlers (18) und das Gehäuse (16) elektrisch miteinander dadurch zu verbinden.

2. Ultraschallwandler nach Anspruch 1, bei welchem die erste Elektrode (20) auf einer Oberfläche des oberen Endes des piezoelektrischen Wandlers (18) vorgesehen und elektrisch an dem Stecker (28) angeschlossen ist;

die zweite Elektrode (22) an einem unteren Abschnitt des piezoelektrischen Wandlers (18) vorgesehen ist und elektrisch an dem Gehäuse (16) angeschlossen ist; und

das Druckmittel (56) das Gehäuse (16) und die zweite Elektrode (22) des piezoelektrischen Wandlers (18) elektrisch verbindet.

3. Ultraschallwandler nach Anspruch 1, bei welchem das Druckmittel (56) eine Kompressionsspulenfeder (47) aufweist.

4. Ultraschallwandler nach Anspruch 1, bei welchem das Druckmittel (56) eine Spulenfeder mit einem U-förmigen Querschnitt aufweist.

5. Ultraschallwandler nach einem der Ansprüche 1 bis 4, bei welchem das Vorspannungsmittel (40) den piezoelektrischen Wandler (18) gegen eine untere Wand des Gehäuses (16) abwärts drückt.

6. Ultraschallwandler nach Anspruch 5, bei welchem das Vorspannungsmittel (40) eine zwischen dem Stecker (28) und einer Oberfläche des oberen Endes des piezoelektrischen Wandlers (18) angeordnete Kompressionsspulenfeder (47) aufweist.

7. Ultraschallwandler nach Anspruch 6, bei welchem die Kompressionsspulenfeder (47) aus elektrisch leitendem Material gebildet ist, um eine elektrische Verbindung zwischen dem Stecker (28) und dem piezoelektrischen Wandler (18) dadurch zu gewährleisten.

8. Ultraschallwandler nach Anspruch 2, bei welchem ein elektrisch leitendes Plattenglied (58) auf der ersten Elektrode (20) in einer Weise angebracht ist, um in engem Kontakt mit der Elektrode (20) zu sein.

**Revendications**

1. Transducteur ultrasonore émetteur-récepteur, comportant un boîtier (16),

un transducteur piézo-électrique (18) disposé dans ledit boîtier (16) et muni d'une première électrode (20) ainsi que d'une deuxième électrode (22),

une fiche (28) montée dans ledit boîtier (16) et reliée électriquement à l'une (20) desdites électrodes, et

un moyen de chargement (40) pour pousser par force ledit transducteur piézo-électrique (18) contre ledit boîtier (16), caractérisé par

un moyen de pression (56) disposé latéralement entre ledit boîtier (16) et ledit transducteur piézo-électrique (18) de manière à être poussé par force contre ledit transducteur, piézo-électrique (18) et ledit boîtier (16), ce moyen étant constitué d'un matériau électriquement conducteur pour relier électriquement par lui-même l'autre (22) desdites électrodes du transducteur piézo-électrique (18) et ledit boîtier (16) entre eux.

2. Transducteur ultrasonore émetteur-récepteur selon la revendication 1, dans lequel la première électrode (20) est disposée sur une surface d'extrémité supérieure dudit transducteur piézoélectrique (18) et elle est reliée électriquement à ladite fiche (28),

la deuxième électrode (22) est disposée sur une partie inférieure dudit transducteur piézoélectrique (18) et elle est reliée électriquement audit boîtier (16), et le moyen de pression (56) relie électriquement ledit boîtier (16) et ladite deuxième électrode (22) dudit transducteur piézo-électrique (18).

3. Transducteur ultrasonore selon la revendication 1, dans lequel ledit moyen de pression (56) comporte un ressort hélicoïdal comprimé.

4. Transducteur ultrasonore selon la revendication 1, dans lequel ledit moyen de pression (56) comporte un ressort hélicoïdal présentant en coupe une forme en U.

5. Transducteur ultrasonore selon l'une quelconque des revendications 1 à 4, dans ledit moyen de chargement (40) pousse par force vers le bas ledit transducteur piézo-électrique (18) contre la paroi de fond dudit boîtier (16).

6. Transducteur ultrasonore selon la revendication 5, dans lequel ledit moyen de chargement (40) comporte un ressort hélicoïdal comprimé (47) directement disposé entre ladite fiche (28) et une surface d'extrémité supérieure dudit transducteur piézo-électrique (18).

7. Transducteur ultrasonore selon la revendication 6, dans lequel ledit ressort hélicoïdal comprimé (47) est constitué en un matériau électriquement conducteur pour assurer par lui-même la liaison électrique entre ladite fiche (28) et ledit transducteur piézo-électrique (18).

8. Transducteur ultrasonore selon la revendication 2, dans lequel un élément de plaque (58) en matériau électriquement conducteur est disposé sur ladite première électrode (20) de manière à être en contact étroit avec ladite électrode (20).

# FIG.1

# FIG.2 PRIOR ART

# FIG.3

# FIG.4